Europäisches Patentamt

European Patent Office

Office européen des brevets

(11) Veröffentlichungsnummer: **0 243 819 B1**

(12) **EUROPÄISCHE PATENTSCHRIFT**

(45) Veröffentlichungstag der Patentschrift: **04.03.92**

(51) Int. Cl.[5]: **B07B 13/00**, B03B 9/06

(21) Anmeldenummer: **87105674.3**

(22) Anmeldetag: **16.04.87**

(54) **Verfahren zum Trennen in Fraktionen einer heterogenen Menge aus festem Material und Vorrichtung zur Durchführung des Verfahrens.**

(30) Priorität: **28.04.86 DE 3614324**

(43) Veröffentlichungstag der Anmeldung:
**04.11.87 Patentblatt 87/45**

(45) Bekanntmachung des Hinweises auf die Patenterteilung:
**04.03.92 Patentblatt 92/10**

(84) Benannte Vertragsstaaten:
**AT BE CH DE ES FR GB GR IT LI LU NL SE**

(56) Entgegenhaltungen:
CH-A- 228 156          DE-C- 149 950
FR-A- 2 430 265        FR-A- 2 496 495
GB-A- 431 801          GB-A- 2 109 707

(73) Patentinhaber: **ORGAN-FASER TECHNOLOGY COMPANY N.V.
de Ruyterkade 62 P.O. Box 812
Curaçao(AN)**

(72) Erfinder: **Frei, Josef
Römerweg 32
CH-5422 Oberehrendingen(CH)**

(74) Vertreter: **Körber, Wolfhart, Dr.rer.nat. et al
Patentanwälte Dipl.-Ing. H. Mitscherlich
Dipl.-Ing. K. Gunschmann Dr.rer.nat. W. Körber Dipl.Ing. J. Schmidt-Evers Dipl.-Ing. W. Melzer Steinsdorfstrasse 10
W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verfahren und auf eine Vorrichtung zur Durchführung des Verfahrens nach dem Oberbegriff des Anspruchs 1 bzw. 7.

Um aus einer heterogenen Menge aus festem Material die einzelnen Stoffe herausholen zu können, oder um die im Müll bzw. Abfall enthaltenen Stoffe einer Wiederverwertung zuführen zu können, bedarf es einer Trennung der Stoffe, wobei sich hierzu unter anderem das spezifische Gewicht bzw. die Wichte der Stoffe als Trennungskriterium anbietet. In der Praxis sind viele Verfahren zum Trennen bekannt, z. B. Windsichtung, Wurfsichtung, Flotation usw. Um diese Verfahren wirksam einsetzen zu können, ist eine Bedingung Voraussetzung, nämlich nur verhältnismäßig kleine Abweichungen vom kleinsten zum größten Partikel. Wenn diese Bedingung erfüllt ist, läßt sich die Menge in bestimmte Stoffe mit jeweils gleicher Wichte trennen. Je nach Art der Weiterverarbeitung, z. B. insbesondere bei der Verarbeitung zu Baustoffen reicht das vorgenannte Trennungskriterium für eine brauchbare Fraktionierung aus. In dem Fall, in dem eine Trennung einzelner Stoffe erforderlich ist, ist eine weitere Trennung nach stoffspezitischen Kriterien durchzuführen.

Bei einem bekannten Verfahren zum Aufbereiten von Müll wird der Abfall zerkleinert, getrocknet, und danach nach einer der vorgenannten Methoden in Fraktionen getrennt. Die Zerkleinerung soll dabei eine etwa gleiche Korngröße gewährleisten, und durch die Trocknung wird verhindert, daß einzelne Stücke der Menge aneinander haften.

Da bei Abfall kaum davon ausgegangen werden kann, daß eine etwa gleiche Korngröße von vorneherein vorliegt, ist das bekannte Trennverfahren mit einem erheblichen, durch die Zerkleinerung bedingten Arbeitsaufwand verbunden, durch den auch die Bearbeitungszeit erheblich verlängert wird.

Als Vorrichtungen zur Durchführung des vorgenannten Trennverfahrens werden spezifische Vorrichtungen wie Sichtungsvorrichtungen, Flotationsvorrichtungen und dgl. eingesetzt. Solche Vorrichtungen sind nicht nur aufwendig, sondern sie benötigen auch eine große Bauweise, um die das Trennen herbeiführende physikalische Wirkung anwenden zu können.

Ein Verfahren und eine Vorrichtung der eingangs angegebenen Arten sind in der DE-C-149950 beschrieben. Bei diesem bekannten Verfahren wird das Material in einer muldenförmigen Schüttelrinne so geschüttelt, daß eine Absonderung der spezifisch schweren Bestandteile nach unten und der spezifisch leichten Bestandteile nach oben erfolgt und dabei das Material insgesamt in der Längsrichtung der Schüttelrinne vorbewegt wird. Der Schüttelrinne sind in unterschiedlichen Höhenlagen in ihre Längsrichtung hintereinander liegend drei Schichten-Entnahmevorrichtungen mit insbesondere horizontalen Platten angeordnet, auf die die jeweils zugehörige Materialschicht gelangt und von dort entnommen werden kann. Hierdurch werden drei übereinander angeordnete Fraktionen von einander getrennt, wobei die Trennschärfe sehr gering ist, weil im jeweiligen Grenzbereich den jeweiligen Fraktionen zugehörige Materialbestandteile vorhanden sind.

Der Erfindung liegt die Aufgabe zugrunde, ein Verfahren und eine Vorrichtung der im Oberbegriff des neuen Anspruchs 1 bzw. 7 enthaltenen Arten so weiterzubilden, daß eine deutlichere Trennung bzw. bessere Trennschärfe zwischen den Fraktionen erreicht wird.

Diese Aufgabe wird durch die Merkmale der Ansprüche 1 bzw. 7 gelöst.

Beim erfindungsgemäßen Trennverfahren wird die Menge auf einen Träger einer Vibration unterworfen, die die spezifisch schwereren Bestandteile und die spezifisch leichteren Bestandteile in senkrechter Richtung voneinander absondert, d. h., die spezifisch schwereren Bestandteile gelangen nach unten und die spezifisch leichteren Bestandteile gelangen nach oben. Dann werden durch Entnahme des Materials in wenigstens drei unterschiedlichen Schichthöhen drei Fraktionen des Materials gewonnen, von denen die mittlere Fraktion den Trennprozeß wieder zugeführt wird. Hierdurch wird der Mischbereich zwischen zwei Fraktionen dem Trennprozeß wieder unterworfen, wodurch eine deutlichere Trennung der Fraktionen erreicht wird. Im Rahmen der Erfindung ist es dabei möglich, nicht nur zwischen zwei, sondern auch zwischen einer größeren Anzahl von Fraktionen jeweils eine mittlere Fraktion zu entnehmen und hierdurch die angestrebte deutliche Trennung zwischen den Fraktionen herbeizuführen.

Der wesentliche Vorteil des erfindungsgemäßen Verfahrens besteht darin, daß es sich auch bei unterschiedlicher Korngröße der Menge durchführen läßt, und es deshalb keiner Zerkleinerung vor der Trennung bedarf. Außerdem stellt sich das erfindungsgemäße Verfahren als ein sehr einfaches Verfahren dar, weil es keines weiteren Mediums für Wind oder Flüssigkeit zur Trennung der Fraktionen bedarf.

Für den Trennvorgang muß das Material ständig in Bewegung gebracht werden. Die Amplituden oder Schwingungen müssen so intensiv sein, daß das gesamte Material bis zur Oberfläche in Bewegung gerät. Der Bewegungsweg darf nur so groß sein, daß das Material vom Behälterboden oder von den Seitenwänden nicht umhergeworfen wird, da sonst statt einer Trennung eine Vermischung erfolgt.

Das zu trennende Material soll so trocken sein, daß es nicht mehr klebt. Eine Verklebung würde den beim erfindungsgemäßen Verfahren eintretenden Fließeffekt beeinträchtigen.

Beim erfindungsgemäßen Verfahren können die Fraktionen nach der Trennung manuell oder maschinell im Stillstand oder kontinuierlich während der Vibration entnommen werden. Leichte Bestandteile, z. B. Papier, Textilstücke, Holz oder andere organische Stoffe werden dem oberen Bereich der Menge entnommen, z. B. nach oben. Die spezifisch schweren Teile der Menge, z. B. Glas, Steine, Metall, Hartplastik und dgl. werden dem unteren Bereich der Menge entnommen, was sowohl manuell als auch maschinell und nacheinander durch Schichtabtragung und auch gleichzeitig erfolgen kann.

Gemäß Anspruch 2 kann die Vibration sowohl durch eine kreisende als auch durch eine geradlinige Hin- und Herbewegung erzeugt werden. Dabei ist es beim Verfahren nach dem Anspruch 3 möglich, nicht nur einen senkrechten Fließeffekt, sondern auch einen waagerechten Fließeffekt hervorzurufen. Hierdurch ist es möglich, die Menge an einem Ende des Behälters zuzuführen, und am anderen Ende die Fraktionen zu entnehmen (s. auch Ansprüche 4 und 5).

Ein weiterer, nach einem oder mehreren der Ansprüche 1 bis 6 erzielbarer Vorteil besteht darin, daß eine Trennung anorganischer und organischer Partikel möglich ist. Vor allem werden organische Fasern von feinem Mineralstaub gereinigt.

Die erfindungsgemäße Vorrichtung nach Anspruch 7 ermöglicht das erfindungsgemäße Verfahren, und sie zeichnet sich insbesondere durch eine einfache und auch kleine Bauweise aus. Es bedarf keines Hilfsmediums zur Trennung wie Wind oder Flüssigkeit, wodurch sich die einfache und kleine Bauweise schon deshalb erklärt, weil es einer Aufnahme des Hilfsmediums nicht bedarf, wie es z. B. bei einer Flotationsvorrichtung der Fall ist.

Die Funktion der erfindungsgemäßen Vorrichtung ist in der Vorteilsbeschreibung für das erfindungsgemäße Verfahren bereits beschrieben worden.

Bei den Ausgestaltungen nach den Ansprüchen 8 und 9 wird der Menge auf einem vergrößerten Bewegungsweg insgesamt mehr Gelegenheit für den Trennvorgang gegeben. Außerdem ist zwischen der Materialzuführung und der Materialentnahme ein horizontaler Abstand vorhanden, so daß die Entnahme an einer Stelle vorgenommen werden kann, an der der Trennungsvorgang schon stattgefunden hat. Diese Ausgestaltungen eignen sich somit insbesondere für den kontinuierlichen Betrieb.

Die in den Ansprüchen 11 bis 13 enthaltenen Merkmale ergeben einfache Bauweisen für die Entnahmevorrichtungen.

Da es sich bei der oberen Fraktion um eine leichte Fraktion handelt, empfiehlt es sich, gemäß Anspruch 14 die obere Entnahmevorrichtung durch eine Absaugvorrichtung zu bilden, die so auf das Material eingestellt ist, daß die unterhalb der leichten Fraktion sich befindliche Fraktion nicht mitgenommen wird. Hierzu tragen auch die Merkmale der Ansprüche 15 bis 17 bei.

Durch die Ausgestaltung nach Anspruch 18 läßt sich die Grenze zwischen der leichten und der schweren Fraktion entweder zu der einen oder zur anderen Fraktion hin verstellen.

Die in den Ansprüchen 20 und 21 enthaltenen Merkmale tragen dazu bei, die Abführung der schweren Fraktion zu vereinfachen. Hierzu ist noch folgendes zu erwähnen. Die Entnahmevorrichtung für die schwere Fraktion kann durch eine Klappe oder einen Schieber der Höhe nach einstellbar sein und so eingestellt werden, daß immer eine bestimmte Schicht im Behälter bleibt, da sonst sich Teile der leichten Fraktion Austritt verschaffen. Hierzu trägt auch die Maßnahme nach Anspruch 21 bei.

Der Anspruch 22 bezieht sich auf die vorteilhafte Verwendung der Vorrichtung in einer Anlage zur Aufbereitung von Abfällen.

Nachfolgend wird die Erfindung anhand in Zeichnungen dargestellter bevorzugter Ausführungsbeispiele erläutert. Es zeigt:

Fig. I    eine erfindungsgemäß ausgestaltete Vorrichtung zum Trennen einer heterogenen Menge aus festem Material im Schnitt;

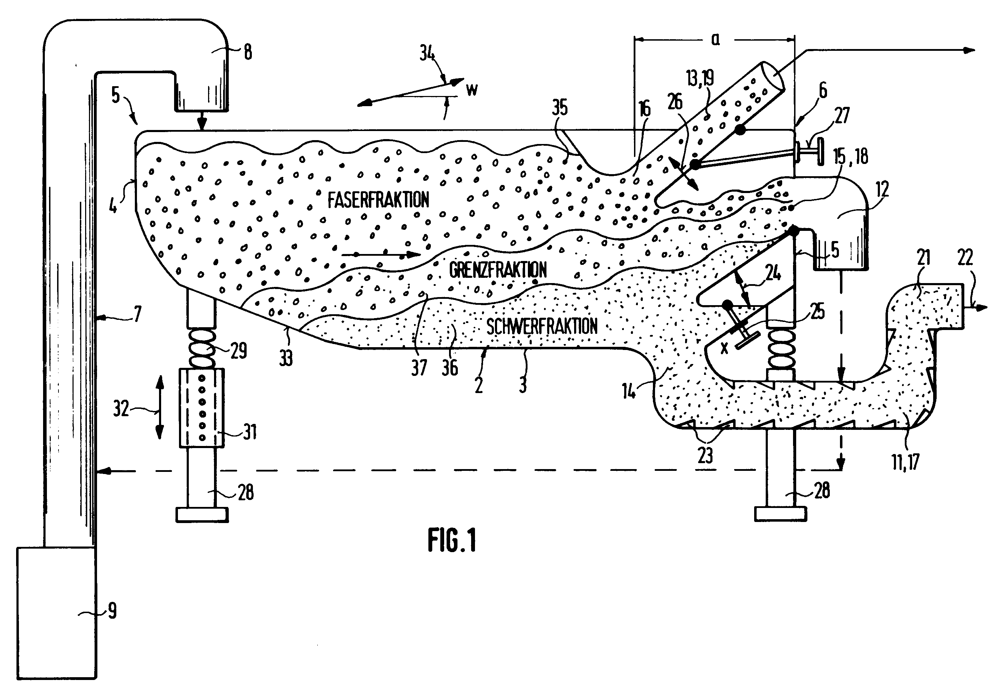

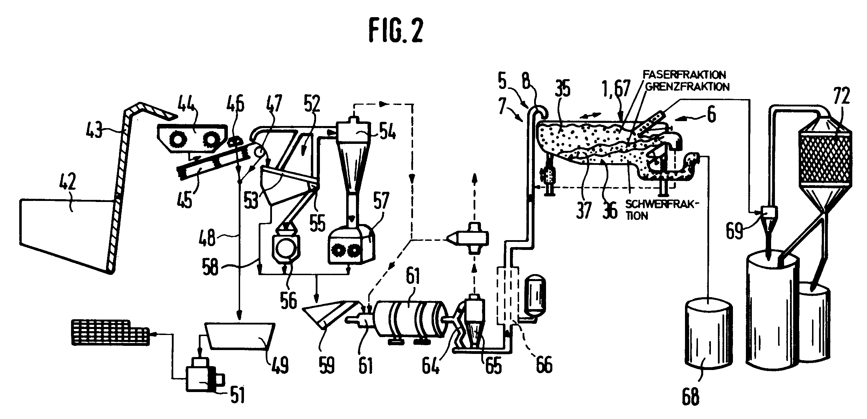

Fig. 2    die Vorrichtung innerhalb einer Aufbereitungs-Anlage für Abfälle.

Die in den Figuren allgemein mit I bezeichnete Vorrichtung ermöglicht die Trennung einer heterogenen Menge aus festem Material in zwei oder drei Fraktionen, nämlich eine leichte Fraktion, ggf. eine mittlere Fraktion und eine schwere Fraktion.

Die Vorrichtung I wird durch einen langgestreckten Behälter 2 mit einem Boden 3 und jeweils zwei einander gegenüberliegenden Seitenwänden und Stirnwänden 4 gebildet. Das in der Zeichnung linke Ende ist mit Zuführungsende 5 und das rechte Ende ist mit Entnahmeende 6 bezeichnet. Die Materialzuführung 7 erfolgt durch ein Zuführungsrohr 8, z.B. in Form eines Steigrohrs, das sich von einem Material-Bunker 9 über das Zuführungsende 5 des Behälters 2 erstreckt.

Am anderen Ende, dem Entnahmeende 6 des Behälters 2, sind drei Entnahmevorrichtungen II bis I3 für die erwähnten Fraktionen vorgesehen. Die Entnahmevorrichtungen II bis I3 werden durch Öffnungen I4 bis I6 im Behälter 2 gebildet, an die sich Entnahmerohre I7 bis I9 anschließen. Die Entnah-

mevorrichtung II für die Schwerfraktion schließt an den Boden 3 des Behälters 2 an und wird durch ein U-förmiges Entnahmerohr I7 gebildet, das vom Boden 3 zunächst abwärts, dann längs der Längsachse des Behälters, dann aufwärts und dann wieder längs der Längsachse horizontal verläuft. Die Anorndung ist so getroffen, daß der zuletzt genannte horizontale Abschnitt 2l des Entnahmerohrs I7 oberhalb des Bodens 3 angeordnet ist. Im Entnahmerohr I7 sind an dessen Innenwand in die Entnahmerichtung 22 gerichtete sägezahnförmige Förderelemente 23 angeordnet, deren Funktion weiter unten noch beschrieben wird.

Die Entnahmevorrichtung I2 für die mittlere Fraktion befindet sich oberhalb der Entnahmevorrichtung II in der zugehörigen Stirnwand 4 des Behälters 3. Das an die Entnahmeöffnung I5 anschließende Entnahmerohr I8 ist entweder mit dem Zuführungsrohr 8 oder mit dem Bunker 9 verbunden, was durch eine Strichlinie angedeutet ist. Die Höhe der Entnahmeöffnung I5, d.h. der Abstand letzterer vom Boden 3 des Behälters 2 ist einstellbar und in der wahlweisen Einstellung feststellbar (vgl. Doppelpfeil 24). Hierzu dient eine andeutungsweise dargestellte Stellvorrichtung 25.

Das Entnahmerohr I9 der Entnahmevorrichtung I3 für die Leichtfraktion ragt von oben in einer zum Zuführungsende 5 schräg nach unten geneigten Position in den Behälter 2 hinein und endet oberhalb der Entnahmeöffnung 15 für die mittlere Fraktion. Die Anordnung ist so getroffen, daß das Entnahmerohr 19 im dem Entnahmeende 6 zugeordneten Längsdrittel des Behälters 2 angeordnet ist, wobei ein horizontaler Abschnitt a zwischen der zugeordneten Stirnwand 4 und der Entnahmeöffnung 16 besteht. Die Neigung des Entnahmerohrs 19 ist ebenfalls veränderlich (vgl. Doppelpfeil 26). Hierzu dient eine ebenfalls angedeutete Stellvorrichtung 27 an der Stirnwand 4.

Der Behälter 2 steht auf Beinen 28 in denen elastische Glieder 29 wie Gummipuffer angeordnet sind.

Die Enden 5, 6 des Behälters 2 sind relativ zueinander höhenverstellbar. Hierzu reicht es aus, ein Ende gegenüber dem anderen höhenverstellbar anzuordnen. Beim vorliegenden Ausführungsbeispiel ist den hinteren, dem Zuführungsende 5 zugeordneten Beinen 28 eine allgemein mit 31 bezeichnete Verstelleinrichtung integriert, die wahlweise Verstellungen des Zuführungsendes 5 der Höhe nach (vgl. Doppelpfeil 32) ermöglicht.

Im Bereich des Zuführungsendes 5 ist der Boden 3 des Behälters 2 über einen Teil seiner Länge zum Entnahmeende 6 hin schräg nach unten geneigt ausgebildet. Der schräge Bodenabschnitt ist mit 33 bezeichnet.

Im Betrieb der Vorrichtung 1 wird festes heterogenes Material durch die Materialzuführung 7 in den Behälter 2 eingefüllt. Der Behälter 2 wird durch einen nicht dargestellten Vibrator in eine Vibration versetzt, die eine Absonderung der spezifisch schweren Bestandteile nach unten und der spezifisch leichten Bestandteile nach oben hervorruft. Beim vorliegenden Ausführungsbeispiel ist die Vibration (s. Doppelpfeil 34) schräg zur horizontalen Längsrichtung des Behälters 2 gerichtet und sie schließt mit der horizontalen Längsrichtung einen spitzen Winkel w ein, der zum Entnahmeende 6 hin offen ist. Während der Vibriation erfolgt nicht nur die Absonderung der spezifisch schweren Bestandteile nach unten und der spezifisch leichten Bestandteile nach oben, sondern das Material wandert auch vom Zuführungsende 5 zum Entnahmeende 6, wobei sich die Absonderung der Bestandteile einstellt. Es findet ein Verdrängungsprozess der Bestandteile statt, wobei die Bestandteile mit dem jeweils schwereren spezifischen Gewicht nach unten rutschen, während die mit dem jeweils spezifisch leichteren Gewicht nach oben gelangen. Die Leichtfraktion 35 sammelt sich im oberen Bereich des Behälters 2 und die Schwerfraktion 36 im unteren Bereich des Behälters. Die im mittleren Bereich (Grenzbereich) vorhandenen Bestandteile der Menge sind mit Grenzfraktion 37 bezeichnet.

Die Verlagerung der Menge vom Zuführungsende 5 zum Entnahmeende 6, die durch eine besondere, die Menge in Richtung auf das Entnahmeende 6 beschleunigende Vibration und/oder durch den wenigstens teilweisen schrägen Boden 3 hervorgerufen wird, trägt zur automatischen Abführung der Schwerfraktion 36 durch das Entnahmerohr I7 und der Grenzfraktion 37 durch das Entnahmerohr I8 bei. Dabei üben die sägezahnförmigen Förderelemente 23 im Entnahmerohr I7 eine Förderwirkung auf die im Entnahmerohr I7 befindliche Schwerfraktion 36 aus. Vom Entnahmerohr I7 gelangt die Schwerfraktion zu einem Lager z.B. zu einem Bunker. Die Grenzfraktion 37 wird durch das Entnahmerohr I8 dem Zuführungsrohr 8 und somit dem Trennvorgang wieder zugeführt. Die Leichtfraktion 35 wird durch eine an das Entnahmerohr I9 angeschlossene, nicht dargestellte Absaugvorrichtung abgesaugt und in die Entnahmerichtung ebenfalls zu einem Lager, z.B. einem Bunker geführt. Das Zuführen und Trennen des Materials sowie das Entnehmen der Fraktionen erfolgt kontinuierlich.

Die vorbeschriebene Trennung der Fraktionen ist unabhängig von der Korngröße des Materials, denn diese nimmt auf die Trennung nach dem spezifischen Gewicht keinen Einfluss. Grundsätzlich bedarf es somit keiner Vorzerkleinerung des Materials vor dem Trennvorgang. Allerdings ist eine Vorzerkleinerung dienlich, weil hierdurch schon eine praktikable Stückgröße vorgegeben und die Zuführung und auch die Entnahme sowie auch die Trennung erleichtert wird.

Bei einem laggestreckten Behälter 2 mit einem Zuführungs-und Entnahmeende 5, 6 ist es wesentlich, daß die Resultierende (Pfeil 34) der Vibration eine horizontale, in Richtung auf das Entnahmeende 6 gerichtete Komponente aufweist. Die Vibration kann sowohl durch eine kreisende als auch durch eine geradlinige Hin- und Herbewegung erzeugt werden, wobei das Wandern des Materials durch unterschiedliche Amplituden oder Beschleunigungen erreicht werden kann. Die Größe des Winkels w kann von Fall zu Fall unterschiedlich sein.

Die Erfindung ist nicht auf einen langgestreckten Behälter und auf das horizontale Wandern des Materials beschränkt. Die Absonderung der Bestandteile unterschiedlichen spezifischen Gewichts wird schon durch eine vertikale Vibration erreicht.

Das erfindunsgemäße Trennverfahren und die Vorrichtung lassen sich vorteilhaft für die Abfallaufbereitung verwenden. In einem solchen Fall befindet sich im Bunker 9 vorzerkleinerter und getrockneter Müll, wobei die Trocknung erforderlich ist, um ein Kleben der Bestandteile aneinander zu verhindern. Bei der Aufbereitung von Abfall (Müll), Kericht oder dgl. umfaßt die Leichtfraktion 35 Fasern und leichte Teile aus Papier, Textilien, Folien, Holz oder andere organische Stoffe. Die Schwerfraktion 36 umfaßt spezifisch schwere Teile wie Glas, Steine, Metalle, Hartplastik und dgl.. Ein Ausführungsbeispiel hierfür wird im folgenden anhand der Aufbereitsungs-Anlage 41 gemäß Fig. 2 beschrieben.

Die Abfälle werden in einen Sammelbunker 42 geschüttet. Vorzugsweise werden Abfälle verwendet, die keine oder nur eine kleine Gärzeit hinter sich haben und auch noch keiner Behandlung wie Vorzerkleinerung, Vorsortierung, Verdichtung auf Deponien oder chemischer Art unterworfen wurden. Die Verwendung von frischen organischen Abfällen hat den Vorteil, daß dem Faser-Ausgangsrohstoff die gewünschte Struktur gegeben werden kann, und daß die wichtigen Bestandteile wie Zellulose und Lignin nicht entfernt bzw. zerstört wurden.

Die derart gebunkerten Abfälle gelangen über eine mechanische Transporteinrichtung 43 kontinuierlich oder diskontinuierlich zu einer Vorzerkleinerungseinheit 44. Diese hat die Aufgabe, einerseits den angelieferten Abfall in seine losen Bestandteile aufzulockern, und andererseits die in ihrer Größe und Zusammensetzung sehr stark veriierenden Abfälle durch Schneiden, Hacken und/oder Reißen auf eine für die Weiterverarbeitung zulässige Größe zu reduzieren. Für diesen Arbeitsvorgang können Schneid- oder Schlagmühlen sowie Hacker oder Reißer verwendet werden. Um eine störungsfreie Verarbeitung zu gewährleisten, und die gewünschte Struktur, Feinheit und Reinheit des Endproduktes zu erreichen, wird vorzugsweise eine langsam laufende Schneidemühle verwendet, die im Handel in verschiedenen Ausführungen erhältlich ist. Zweckmäßigerweise wird eine Ausführung mit nebeneinanderliegenden und gegeneinander laufenden Mehrmesserwellen eingesetzt. Zudem sollten die Mehrmesserwellen niedrigtourig und die einzelnen Wellen mit unerschiedlichen Drehzahlen arbeiten. Außerdem sollten sämtliche Wellen zur Gewährung von Sicherheit, Leistung und Selbstreinigung reversierbar sein. Eine solche Maschine ist im Handel unter der Bezeichnung "SHREDDER" erhältlich. Ähnliche Maschinen mit derselben Bezeichnung werden auch zur Zerkleinerung von alten Autos und anderen Blechwaren eingesetzt.

Der so durch die Vorzerkleinerungseinheit 44 zerlegte und auf eine Größe von etwa 100 mm vorzerkleinerte Abfall gelangt in freiem Fall auf eine Fördereinrichtung 45.

Um in den nachfolgenden Einrichtungen einen störungsfreien Betrieb zu gewährleisten ist es wichtig, daß im Abfall eventuell vorhandene Eisenteile gänzlich aussortiert werden. Um dies zu erreichen, befördert die Fördereinrichtung 45 den Abfall in Form einer gleichmäßig ausgerichteten, relativ dünnen Flußschicht an einer oberhalb der Fördereinrichtung 45 angeordneten Magnetbandeinheit 46 vorbei und wirft es an ihrem Ende auf einen untenliegenden, rotierenden Trommelmagneten 47. Da die aus der Vorzerkleinerungseinheit 44 austretenden Abfallmengen schwanken, ist die Fördereinrichtung 45 vor der Magnetbandeinheit 46 mit einer nicht dargestellten Egalisiereinrichtung versehen.

Die Magnetbandeinheit 46 hat die Aufgabe, die in der oberen Hälfte der Flußschicht sich befindenden Eisenteile auszusortieren. Der rotierende Trommelmagnet 47 dient dazu, die in der unteren Hälfte der Abfall-Flußschicht liegenden Eisenteile zu entfernen.

Die Magneteinheiten 46 und 47 sind über eine Fördereinrichtung 48 mit einem Auffangbunker 49 verbunden. Vom Auffangbunker 49 gelangt das aussortierte Metall in eine Presse 51, welche die aussortierten Eisenteile zu handelsüblichen Paketen verpreßt, die anschließend einer Altmetallgießerei zugeführt werden können.

Der derart von Eisenteilen befreite Abfall wird darauf einer ersten Fraktioniereinheit 52 zugeführt. Die letztere weist ein Rüttelsieb 53 zur Erzielung einer Feinfraktion auf, wobei die Maschenweite dieses Siebes etwa 6 bis 8 mm beträgt. Ferner ist eine auf die Oberseite des Rüttelsiebes 53 gerichtete Absaugeinheit 54 zur Erzielung einer ersten, spezifisch leichten Grobfraktion und am unteren Ende des geneigt angeordneten Rüttelsiebs 53 eine Aufnahmerinne 55 zur Aufnahme des auf dem Rüttelsieb 53 sich noch befindenden, wegen seiner Größe nicht durch das letztere hindurch gelangenden bzw. wegen seines Gewichtes nicht absaugbaren Gutes zur Erzielung einer ersten spezifisch schweren Fraktion angeordnet.

Die derartige Aufteilung in drei erste Fraktionen bewirkt den Vorteil, daß die nachfolgenden Zerkleinerungeinheiten 56 und 57 von denjenigen Feinteilen, die die erwünschte Endgröße nicht übersteigen, entlastet werden. Der Anteil dieser Feinteile beträgt normalerwweise ungefähr 15 Gew.-%, d.h. es werden bei der nachfolgenden Zerkleinerung etwa 15 % Energie eingespart. Das derart aussortierte Feinmaterial wird über eine Bypaßleitung 58 unter Umgehung der beiden Zerkleinerungseinheiten 56 und 57 dem in den letzteren nachzerkleinerten Abfall wieder beigemischt.

Die Absaugeinheit 54 kann aus einem handelsüblichen Gerät bestehen, wie es z.B. in der Span- und Futtermittelindustrie eingesetzt wird. Das von der Absaugeinheit 54 über die Absaugkanäle 54a, 54b und 54c aus dem Abfall-Strom abgesaugte, spezifisch leichte Material besteht zur Hauptsache aus Papier, Karton, Folien, Textilien und Holzspänen, d.h. organischen Teilen, und wird zur letzten Strukturierung und Zerkleinerung der als Feinhakker ausgebildeten Zerkleinerungseinheit 57 zugeführt. Solche Zerkleinerungseinheiten sind im Handel unter dem Begriff Feinhacker, Zerspaner oder Feinmühlen erhältlich. Es hat sich dabei als zweckmäßig erwiesen, wenn Rotorzerkleinerer eingesetzt werden, bei denen Messerrotoren gegen Messerstatoren oder Messerrotoren gegen Messerrotoren arbeiten, und die insbesondere mit einer durchlässigen Sperre zur Erzielung der Endmaterialgröße versehen sind.

Die mittels von den Feinteilen und anderseits von den spezifisch leichten Teilen befreite, in der Praxis vorwiegend aus anorganischen Teilen bestehende, spezifisch schwere zweite Grobfraktion wird in der separaten Zerkleinerungseinheit 56 einem granulierenden Zerkleinerungsvorgang unterworfen. Die Zerkleinerungseinheit 56 hat die Aufgabe, die hier anfallenden unterschiedlichen Abfallteile in die gewünschte und zur vollständigen Wiederverwertung erforderliche, einer Siebmaschenweite von ca. 6 mm entsprechende Endgröße zu bringen. Solche Zerkleinerungseinheiten 56 sind im Handel unter der Bezeichnung Hammer-, Prall- oder Schlagmühlen erhältlich und können insbesondere dann eingesetzt werden, wenn sie eine auf die geringste zu erzielende Partikelgröße abgestimmte durchlässige Sperre haben.

Die aus den Zerkleinerungseinheiten 56 und 57 sowie der Bypaßleitung 58 anfallenden Fraktionen werden gemeinsam einem Auffangbehälter 59 zugeführt. Aus letzterem wird das gespeicherte Material einer Trocknungs- und Sterilisiereinheit 61 zugeführt. Diese Trocknungseinheit 61 hat die Aufgabe, das anfallende Material auf eine bestimmte, gleichbleibende Restfeuchtigkeit zu trocknen und die im Material aus Gesundheitsgründen unerwünschten Stoffe wie z.B. pathogene Bakterien, zu vernichten. Zu diesem Zweck sind in der Trocknungseinheit 61 Temperaturen von über 100° C erreichbar und die Aufenthaltszeit in der Trocknungseinheit 61 ist ebenfalls regulierbar. Die Zufuhr heißer trockener Luft aus der Heizeinrichtung 62 über die Rezirkulationsleitung 63 und die Abfuhr der mit Feuchtigkeit angereicherten Luft erfolgt kontinuierlich und ist ebenfalls regulierbar um auf diese Weise die Restfeuchtigkeit des aus der Trocknungseinheit 61 austretenden Materials auf einen gewünschten Wert einregulieren zu können.

Nach der Trocknungseinheit 61 wird das derart behandelte Gut mittels einer ersten Trennvorrichtung 64 in eine spezifisch leichte und in eine spezifisch schwere Fraktion aufgeteilt, und danach die spezifisch leichte Fraktion zur Abführung der vom Trocknungsprozeß herstammenden feuchten Abluft einem als Abscheidezyklon ausgebildeten Abluftabscheider 65 zugeführt. Auf diese Weise kann der Verschleiß im Abluftabscheider 65 erheblich vermindert und die Betriebssicherheit desselben gleichzeitig erheblich vergrößert werden. Das aus dem Abluftabscheider 65 austretende Material wird darauf wieder mit der vorher abgetrennten, spezifisch schweren Fraktion zusammengeführt und über eine Ozonbehandlungseinrichtung 66 einer zweiten Trennvorrichtung 67 zugeführt, die der Vorrichtung I gemäß Fig. L entspricht und das Gut in die Leichtfraktion 35, die Schwerfraktion 36 und die Mittelfraktion 37 trennt. Letztere wird dem Trennprozeß wieder zugeführt. Die Schwerfraktion 36 stellt eine Granulatfraktion dar und gelangt durch eine Fördervorrichtung zu einer Lagerstelle 68 bzw. einem Bunker. Die vorzugsweise abgesaugte Leichtfraktion 35 wird zu einem Abscheider 69 gefördert, von dem die leichten faserförmigen Bestandteile zur Lagerstelle (Bunker) 71 gelangen, während feine staubförmige Teile zu einem weiteren Abscheider 72 bzw. Filter gefördert werden, die eine letztere Trennung von faserförmigen Bestandteilen, die ebenfalls zur Lagerstelle 71 gelangen, und Staub vornimmt, der in einen Bunker 73 gelangt.

Die zur Lagerstelle 71 gelangende Leichtfraktion umfaßt ein hochwertiges, faserförmiges Gut, das als Roh- oder Zuschlagstoff zur Herstellung von Papier, Platten oder anderen Baumaterialien wie Steinen, Bitumenbelägen oder Beton sowie zu Heiz- oder Verpackungszwecken (Verbrennung, Pyrolyse, Biogasgewinnung) ggf. nach einer Pressung zu Briketts oder Pellets weiterverwertet werden können.

**Patentansprüche**

1. Verfahren zum Trennen der Bestandteile einer heterogenen Menge aus festem Material, bei dem das Material ggf. zerkleinert, getrocknet und danach in Fraktionen getrennt wird, wobei die Menge auf einem muldenförmigen Träger (2) einer die Absonderung der spezifisch schweren Bestandteile nach unten und der spezifisch leichten Bestandteile nach oben hervorrufenden Vibration ausgesetzt wird und danach wenigstens drei Fraktionen (35, 36, 37) in unterschiedlichen Schichthöhen entnommen werden,

**dadurch gekennzeichnet,** daß die aus der (den jeweiligen) mittleren Schichthöhe(n) entnommene(n) Fraktion(en) (37) dem Trennprozeß wieder zugeführt wird (werden).

2. Verfahren nach Anspruch 1, **dadurch gekennzeichnet,** daß die Vibration durch eine kreisende oder eine geradlinige Hin- und Herbewegung erzeugt wird.

3. Verfahren nach Anspruch 1 oder 2, **dadurch gekennzeichnet,** daß der Menge mit einer geneigten resultierenden Bewegungsrichtung (34) der Vibration eine etwa horizontale Bewegung übertragen wird,

4. Verfahren nach Anspruch 3, **dadurch gekennzeichnet,** daß die Menge an dem Ende (6) des Trägers (2) entnommen wird, zu der die resultierende Bewegungsrichtung (34) schräg aufwärts gerichtet ist, und daß die Menge dem anderen Ende des Trägers (2) zugeführt wird.

5. Verfahren nach einem der Ansprüche 3 oder 4, **dadurch gekennzeichnet,** daß die untere (Schwer-) Fraktion (36) und ggf. die Mittelfraktion (37) unter Ausnutzung der Bewegung der Menge automatisch abgeführt werden.

6. Verfahren nach einem der Ansprüche 1 bis 5, **dadurch gekennzeichnet,** daß die obere (Leicht-) Fraktion (35) abgesaugt wird.

7. Vorrichtung zur Durchführung des Verfahrens nach einem oder mehreren der vorhergehenden Ansprüche, mit einem Behälter (2), dessen einem Ende eine Zuführungsvorrichtung (7) für das heterogene Material und dessen gegenüberliegendem Ende drei oder mehrere übereinander angeordnete Entnahmevorrichtungen (11, 12, 13) für durch den Trennvorgang erhaltene Fraktionen der Menge zugeordnet sind,

**dadurch gekennzeichnet,** daß die mittlere oder mehrere mittlere Entnahmevorrichtung(en) (12) mit der Zuführungsvorrichtung (7) oder mit dem oberen Eingangsbereich des Behälters (2) verbunden ist bzw. sind.

8. Vorrichtung nach Anspruch 7, **dadurch gekennzeichnet,** daß der Behälter (2) eine langgestreckte Form aufweist, das eine Material-Zuführungsvorrichtung (7) im Bereich des einen Endes (5) und die Entnahmevorrichtungen (11 bis 13) im Bereich des anderen Endes (6) des Behälters (2) angeordnet sind und daß die resultierende Bewegungsrichtung (34) der Hin- und Herbewegung der Vibration zum Entnahmeende (6) des Behälters (2) schräg aufwärts gerichtet ist.

9. Vorrichtung nach Anspruch 7 oder 8, **dadurch gekennzeichnet,** daß der Behälter (2) eine langgestreckte Form aufweist, daß eine Material-Zuführungsvorrichtung (7) im Bereich eines Endes (5) des Behälters (2) und die Entnahmevorrichtungen im Bereich des anderen Endes (6) angeordnet sind und daß der Boden (3) des Behälters (2) wenigstens teilweise, vorzugsweise am Zuführungsende (5) zum Entnahmeende (6) hin abwärts geneigt ist.

10. Vorrichtung nach einem der Ansprüche 7 bis 9, **dadurch gekennzeichnet,** daß die Enden (5, 6) des Behälters (2) relativ zueinander höhenverstellbar sind.

11. Vorrichtung nach einem der Ansprüche 7 bis 10, **dadurch gekennzeichnet,** daß die Entnahmevorrichtungen (11, 12, 13) jeweils eine Entnahmeöffnung (14, 15, 16) und eine sich daran anschließende Fördervorrichtung (17, 18, 19) aufweisen.

12. Vorrichtung nach einem der Ansprüche 7 bis 11, **dadurch gekennzeichnet,** daß die Entnahmevorrichtungen (11, 12, 13) durch Rohre (17, 18, 19) gebildet sind.

13. Vorrichtung nach Anspruch 11 oder 12, **dadurch gekennzeichnet,** daß wenigstens eine der Entnahmeöffnungen (14, 15, 16) in der Wand (3, 4) des Behälters (2) angeordnet ist.

14. Vorrichtung nach einem der Ansprüche 7 bis 13, **dadurch gekennzeichnet,** daß die obere Entnahmevorrichtung (13) mit einer Absaugvorrichtung in Verbindung steht.

15. Vorrichtung nach einem der Ansprüche 12 bis 14, **dadurch gekennzeichnet,** daß das Entnahmerohr (19) der oberen Entnahmevorrichtung (13) von oben in den Behälter (2) ragt.

16. Vorrichtung nach Anspruch 14 oder 15, **dadurch gekennzeichnet,** daß das Entnahmerohr (19) zum Zuführende (5) hin geneigt ist.

**17.** Vorrichtung nach Anspruch 16, **dadurch gekennzeichnet,** daß die Neigung verstellbar und in der jeweiligen Verstellposition feststellbar ist.

**18.** Vorrichtung nach einem der Ansprüche 11 bis 17, **dadurch gekennzeichnet,** daß die Höhe der mittleren Entnahmeöffnung (15) verstellbar und in der jeweiligen Stellung feststellbar ist.

**19.** Vorrichtung nach einem der Ansprüche 7 bis 18, **dadurch gekennzeichnet,** daß die Materialzuführungsvorrichtung ein Zuführungsrohr (8) aufweist.

**20.** Vorrichtung nach einem der Ansprüche 12 bis 19, **dadurch gekennzeichnet,** daß das Entnahmerohr (17) wenigstens der unteren Entnahmevorrichtung (11) sägezahnförmige Förderelemente (23) aufweist.

**21.** Vorrichtung nach einem der Ansprüche 12 bis 20, **dadurch gekennzeichnet,** daß das Entnahmerohr (17) der unteren Entnahmevorrichtung (11) eine gegenüber dem Boden (3) des Behälters (2) aufwärts gerichtete Stufe bildet.

**22.** Verwendung der Vorrichtung nach einem der Ansprüche 7 bis 21, in einer Aufbereitungsanlage für Haushalts-, Gewerbe- und anderen dgl. Abfällen im Aufbereitungsprozess hinter einer Trocknungsvorrichtung (61) zwecks Fraktionierung, insbesondere zur Gewinnung eines Faser- und/oder Granulatmaterials.

**Claims**

**1.** Method for separating the components of a heterogeneous mass of solid material, in which the material is, if need be, comminuted, dried and thereafter separated into fractions, wherein the mass is subjected on a trough-shaped carrier (2) to vibration causing the high-density components to separate downwards and the low-density components to separate upwards, and subsequently at least three fractions (35, 36, 37) are removed at different layer levels, characterised in that the fraction or fractions (37) removed from the middle layer or layers is or are returned to the separating process.

**2.** Method according to claim 1, characterised in that the vibration is produced by a rotary or linear reciprocating movement.

**3.** Method according to claim 1 or claim 2, characterised in that an approximately horizontal movement is conveyed to the mass by means of an inclined resultant direction of vibratory movement (34).

**4.** Method according to claim 3, characterised in that the mass is removed at the end (6) of the carrier (2) towards which the resultant direction of movement (34) is slopes upwards and that the mass is supplied to the other end of the carrier (2).

**5.** Method according to claim 3 or 4, characterised in that the lower (heavy) fraction (36) and possibly the middle fraction (37) are automatically removed by utilizing the movement of the mass.

**6.** Method according to any one of claims 1 to 5, characterised in that the upper (light) fraction (35) is sucked off.

**7.** Apparatus for carrying out the method according to any one or more of the preceding claims, comprising a container (2) having a feed device (7) for the heterogeneous material associated with its one end and three or more removal devices (11, 12, 13) for the fractions of the mass obtained by the separating process arranged one above the other at its opposite end, characterised in that the middle removal device or devices (12) is or are connected to the feed device (7) or to the upper inlet region of the container (2).

**8.** Apparatus according to claim 7, characterised in that the container (2) has an elongated shape, that a material feed device (7) is arranged in the region of the one end (5) and the removal devices (11 to 13) are arranged in the region of the other end (6) of the container (2), and that the resultant direction (34) of the reciprocating movement of the vibration slopes upwards towards the removal end (6) of the container (2).

**9.** Apparatus according to claim 7 or claim 8, characterised in that the container (2) has an elongated shape, the material feed device (7) is arranged in the region of one end (5) of the container (2) and the removal devices are arranged in the region of the other end (6) and that the bottom (3) of the container (2) is at least partly inclined downwards, preferably at the feed end (5), towards the removal end (6).

**10.** Apparatus according to any one of claims 7 to 9, characterised in that the ends (5, 6) of the container (2) can be adjusted in height relative to one another.

11. Apparatus according to any one of claims 7 to 10, characterised in that each of the removal devices (11, 12, 13) has a removal opening (14, 15, 16) and a conveying device (17, 18, 19) connected thereto.

12. Apparatus according to any one of claims 7 to 11, characterised in that the removal devices (11, 12, 13) comprise pipes (17, 18, 19).

13. Apparatus according to claim 11 or claim 12, characterised in that at least one of the removal devices (14, 15, 16) is arranged in the wall (3, 4) of the container (2).

14. Apparatus according to any one of claims 7 to 13, characterised in that the upper removal device (13) is connected to a suction device.

15. Apparatus according to any one of claims 12 to 14, characterised in that the removal pipe (19) of the upper removal device (13) projects into the container (2) from above.

16. Apparatus according to claim 14 or claim 15, characterised in that the removal pipe (19) is inclined towards the feed end (5).

17. Apparatus according to claim 16, characterised in that the inclination can be adjusted and then fixed in the adjusted position.

18. Apparatus according to any one of claims 11 to 17, characterised in that the height of the middle removal opening (15) can be adjusted and then fixed in position.

19. Apparatus according to any one of claims 7 to 18, characterised in that the material feed device comprises a feed pipe (8).

20. Apparatus according to any one of claims 12 to 19, characterised in that the removal pipe (17) of at least the lower removal device (11) has saw-tooth-shaped conveyor elements (23).

21. Apparatus according to any one of claims 12 to 20, characterised in that the removal pipe (17) of the lower removal device (11) forms an upward step relative to the bottom (3) of the container (2).

22. Use of the apparatus according to any one of claims 7 to 21 in a plant for processing domestic, industrial and other like waste in the process after a drying device (61) for the purpose of fractionation, in particular for obtaining a fibrous material and/or granulate.

**Revendications**

1. Procédé de séparation des constituants d'un mélange hétérogène de matières solides, dans lequel la matière est, le cas échéant, broyée, séchée, et ensuite séparée en fractions, le mélange étant soumis sur un support (2) en forme d'auge à un vibration provoquant la séparation des constituants spécifiquement lourds vers le bas et des constituants spécifiquement légers vers le haut, au moins trois fractions (35, 36, 37) étant ensuite prélevées dans différentes hauteurs de la couche de matière,
   **caractérisé** en ce que la ou les fractions (37) prélevées dans la ou les hauteurs médianes respectives de la couche de matière est ou sont recyclées dans le processus de fractionnement.

2. Procédé selon la revendication 1, caractérisé en ce que la vibration est produite par un mouvement circulaire ou par un mouvement de va-et-vient en ligne droite.

3. Procédé selon la revendication 1 ou 2, caractérisé en ce qu'on impartit au mélange, avec une direction résultante inclinée (34) du mouvement de la vibration, un mouvement sensiblement horizontal.

4. Procédé selon la revendication 3, caractérisé en ce que le mélange est prélevé à l'extrémité (6) du support (2) par rapport à laquelle la direction résultante (34) du mouvement est dirigée obliquement vers le haut, et en ce que le mélange est introduit à l'autre extrémité du support (2).

5. Procédé selon une des revendications 3 ou 4, caractérisé en ce que la fraction inférieure (lourde) (36) et, le cas échéant, la fraction médiane (37) sont évacuées automatiquement en utilisant le mouvement du mélange.

6. Procédé selon une des revendications 1 à 5, caractérisé en ce que la fraction supérieure (légère) (35) est évacuée par aspiration.

7. Dispositif pour la mise en oeuvre du procédé selon une ou plusieurs des revendications précédentes, avec un récipient (2) à une extrémité duquel est associé un dispositif d'alimentation (7) pour la matière hétérogène, et à l'extrémité opposée duquel sont associés trois ou plus de trois dispositifs de prélèvement (11, 12, 13) disposés l'un au-dessus de l'autre pour les fractions du mélange obtenues par le processus de fractionnement, **caractérisé** en ce que le ou les dispositifs de prélèvement médians (12) est ou sont reliés au dispositif d'alimentation (7) ou à la région supérieure d'entrée du récipient (2).

8. Dispositif selon la revendication 7, caractérisé en ce que le récipient (2) présente une forme allongée, en ce qu'un dispositif d'alimentation (7) pour la matière est disposé dans la région d'une extrémité (5) et que les dispositifs de prélèvement (11 à 13) sont disposés dans la région de l'autre extrémité (6) du récipient (2), et en ce que la direction résultante (34) du mouvement de va-et-vient de la vibration est dirigée obliquement vers le haut par rapport à l'extrémité de prélèvement (6) du récipient (2).

9. Dispositif selon la revendication 7 ou 8, caractérisé en ce que le récipient (2) présente une forme allongée, en ce qu'un dispositif d'alimentation (7) de la matière est disposé dans la région d'une extrémité (5) du récipient (2), en ce que les dispositifs de prélèvement sont disposés dans la région de l'autre extrémité (6), et en ce que le fond (3) du récipient (2) est incliné au moins partiellement vers le bas, de préférence à partir de l'extrémité d'alimentation (5) vers l'extrémité de prélèvement (6).

10. Dispositif selon une des revendications 7 à 9, caractérisé en ce que les extrémités (5, 6) du récipient (2) sont réglables en hauteur, l'une par rapport à l'autre.

11. Dispositif selon une des revendications 7 à 10, caractérisé en ce que les dispositifs de prélèvement (11, 12, 13) présentent chacun une ouverture de prélèvement (14, 15, 16) et un dispositif de transport (17, 18, 19) s'y raccordant.

12. Dispositif selon une des revendications 7 à 11, caractérisé en ce que les dispositifs de prélèvement (11, 12, 13) sont constitués par des tuyaux (17, 18, 19).

13. Dispositif selon la revendication 11 ou 12, caractérisé en ce qu'au moins une des ouvertures de prélèvement (14, 15, 16) est disposée dans la paroi (3, 4) du récipient (2).

14. Dispositif selon une des revendications 7 à 13, caractérisé en ce que le dispositif de prélèvement supérieur (13) est relié à un dispositif d'aspiration.

15. Dispositif selon une des revendications 12 à 14, caractérisé en ce que le tuyau de prélèvement (19) du dispositif de prélèvement supérieur (13) s'étend depuis le haut dans le récipient (2).

16. Dispositif selon la revendication 14 ou 15, caractérisé en ce que le tuyau de prélèvement (19) est incliné en direction de l'extrémité d'alimentation (5).

17. Dispositif selon la revendication 16, caractérisé en ce que l'inclinaison est réglable et immobilisable dans la position de réglage correspondante.

18. Dispositif selon une des revendications 11 à 17, caractérisé en ce que la hauteur de l'ouverture de prélèvement médiane (15) est réglable et immobilisable dans la position correspondante.

19. Dispositif selon une des revendications 7 à 18, caractérisé en ce que le dispositif d'alimentation en matière présente un tuyau d'alimentation (8).

20. Dispositif selon une des revendications 12 à 19, caractérisé en ce que le tuyau de prélèvement (17) au moins du dispositif de prélèvement inférieur (11) présente des éléments de transport (23) en forme de dents de scie.

21. Dispositif selon une des revendications 12 à 20, caractérisé en ce que le tuyau de prélèvement (17) du dispositif de prélèvement inférieur (11) forme un gradin dirigé vers le haut par rapport au fond (3) du récipient (2).

22. Utilisation du dispositif selon une des revendications 7 à 21 dans une installation de traitement des ordures ménagères, industrielles et autres dans un processus de traitement à la suite d'un dispositif de séchage (61) dans le but de fractionnement, en particulier pour l'obtention d'une matière fibreuse et/ou d'une matière en granulat.

FIG.1

# FIG.2

FASERFRAKTION
GRENZFRAKTION
SCHWERFRAK-
TION

EP 0 243 819 B1